# EUROPEAN PATENT SPECIFICATION

(11) **EP 4 230 879 B1**
(45) Date of publication and mention of the grant of the patent: **19.02.2025**
(21) Application number: 23156905.4
(22) Date of filing: 15.02.2023
(51) Int. Cl.: F16B 5/02

(54) **ASSEMBLY FOR CONNECTING A PLASTIC PART TO A BASIC PART**
ANORDNUNG ZUM VERBINDEN EINES KUNSTSTOFFTEILS MIT EINEM BASISTEIL
ENSEMBLE DE LIAISON D'UNE PIÈCE EN MATIÈRE PLASTIQUE À UNE PIÈCE DE BASE

(30) Priority: 22.02.2022 CZ 20220081
(43) Date of publication of application: 23.08.2023
(73) Proprietor: SIMAF CZ s.r.o., 619 00 Brno, Horni Herspice (CZ)
(72) Inventor: Pechdimaldji, Stephane, 78140 Velizy (FR)
(74) Representative: Malusek, Jiri

(56) References cited:
- EP-B1- 1 213 186
- EP-B1- 3 070 343
- CN-U- 201 613 517
- US-A1- 2015 075 496

## Description

### Technical field

The invention relates to an assembly for connecting a plastic part to a basic part, typically a metal part, by means of a screw.

### State of the art

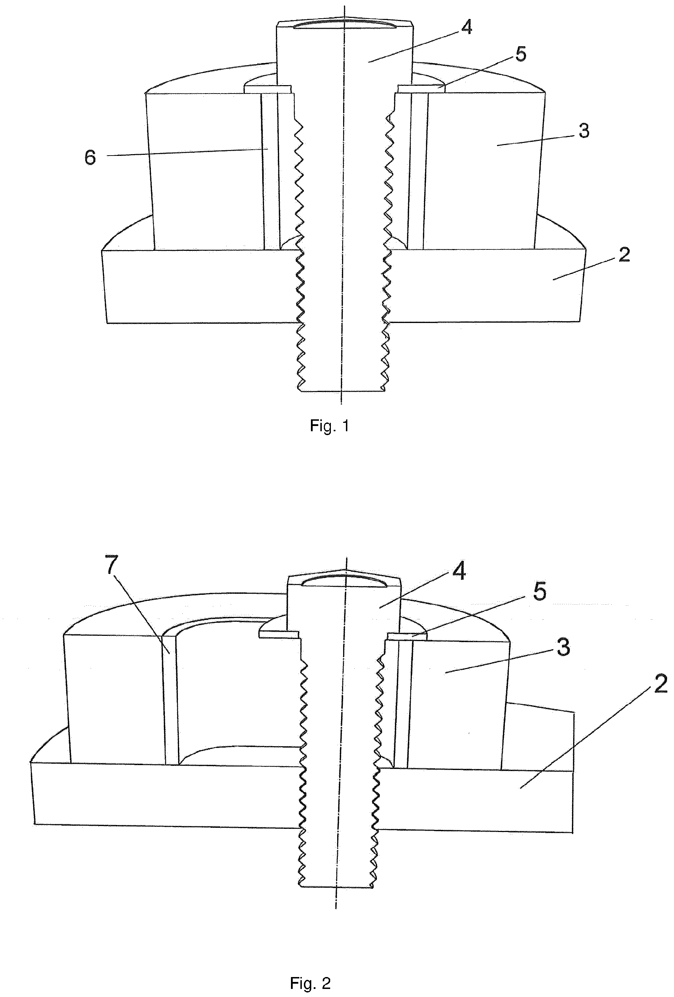

In engineering practice, it is often necessary to connect a plastic part to a stronger, usually metal part, by means of a screw joint. An example of such an assembly, as connected according to the state of the art, is shown in vertical section in Fig. 1. Generally, there is a risk of deforming a plastic part when tightening the joint. This problem is solved by providing a plastic part, already when it is manufactured, with a cylindrical spacer 6 fixed in its openings, as shown in Fig. 1. Nevertheless, if there are two screws, it is difficult to maintain the distance tolerances between the plastic part and the other part, so it is suitable to extend these tolerances. The plastic part is then fitted in its oval opening with an oval spacer 7, as shown in Fig. 2. This is to eliminate any inaccuracy in the relative position of two openings, so a longitudinal groove with an oval spacer 7 is used at the second type opening, thus enabling the assembler to position the joint correctly. This will reduce material degradation due to creep when the plastic part is compressed during screw tightening and damage of the plastic part. A prior art assembly is known from EP 3 070 343 B1**.**

The disadvantage of the oval spacer is the difficult and relatively expensive production and thus the price of the connection compared to the cylindrical spacer.

The aim of the invention is to present a structurally simple assembly of components for connecting a plastic part to a basic part with sufficient screw fixation without deformation of the plastic part and to provide freedom in the relative positioning of multiple joints during assembly.

### Summary of the invention

The above mentioned deficiencies are eliminated by an assembly for connecting a plastic part to a basic part according to claim 1, where the oval opening of the plastic part is provided with a projecting continuous circumferential projection and a cylindrical spacer is provided with a circumferential groove on its outer circumference, wherein the continuous circumferential projection is provided in the oval opening at a height corresponding to the position of the groove on the outer circumference of the cylindrical spacer.

In a preferred embodiment is the width of the circumferential groove greater than the width of the continuous circumferential projection.

In another preferred embodiment is the continuous circumferential projection arranged at half the height of the oval opening and the circumferential groove on the cylindrical spacer is arranged at half the height of the cylindrical spacer.

In another preferred embodiment is the cylindrical spacer with groove provided with a collar at the upper end.

In another preferred embodiment is the cylindrical spacer made of metal as formed or machined by lathe.

### Brief description of drawings

The invention will be further described using drawings, where Fig.1 shows a section through the screw joint of a plastic part to a basic part using a cylindrical spacer according to the state of the art, Fig. 2 shows a section through the screw joint of a plastic part to a basic part using an oval spacer according to the state of the art, Fig 3 shows a section through an assembly for connecting a plastic part to a basic part according to the invention, Fig. 4 shows a detail of the connection of the circumferential groove on the spacer with the circumferential projection on the plastic part in section, and Fig. 5 shows a section through an assembly for connecting a plastic part to a basic part according to the invention, where the spacer is provided with a collar.

### Preferred embodiment of the invention

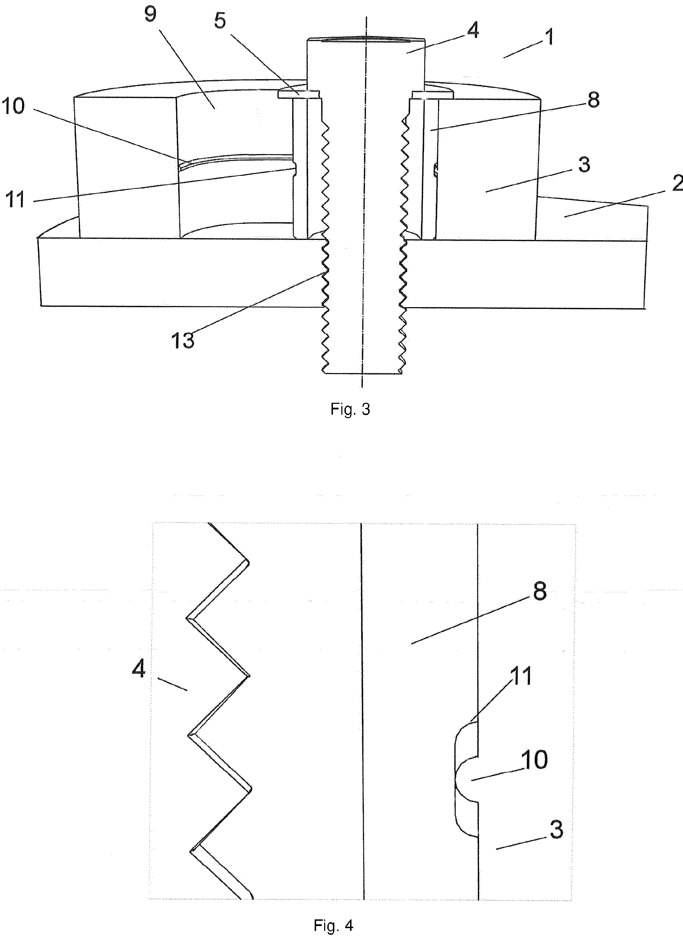

Fig. 3 shows a vertical section of the assembly 1 for connecting a plastic part 3 to a basic part 2 by means of a screw 4 with a washer 5. The joint consists of a cylindrical spacer 8 in the form of a tube provided with a groove 11 on its outer circumference, preferably made of metal, and machined by lathe or formed. The cylindrical spacer 8 with groove 11 is slidingly arranged in an oval opening 9 made in the plastic part 3. The cylindrical spacer 8 is provided with a groove 11 on its outer circumference, preferably in the middle of its height, and the plastic part 3 is in the oval opening 9 provided with a projecting continuous circumferential projection 10 on its inner circumference at a height corresponding to the position of the groove 11 on the cylindrical spacer 8. When assembled, the resistance of the continuous circumferential projection 10 is overcome by pressure on the cylindrical spacer 8 with groove until it engages the groove 11 thereof.

Fig. 4 shows in section a detail of the arrangement of the aforementioned groove 11 on the cylindrical spacer 8 and the continuous circumferential projection 10 provided in the oval opening 9 in the plastic part 3. It can be seen that the width of the groove 11 is greater than the width of the continuous circumferential projection 10, and the groove 11 extends with a slight clearance on both sides. This is to eliminate height inaccuracies in the production of the groove 11 on the cylindrical spacer 8 or the continuous circumferential projection 10 in the oval opening 9 in the plastic part 3. This allows the spacer 8 to be easily moved within the oval opening 9. The continuous circumferential projection 10 in the plastic part 3 is already provided when it is produced.

A screw 4 is inserted into the cylindrical spacer 8 provided with the groove 11 and the screw 4 can move the cylindrical spacer 8 until the shank is accurately aligned with respect to the threaded opening 13 in the basic part 2.

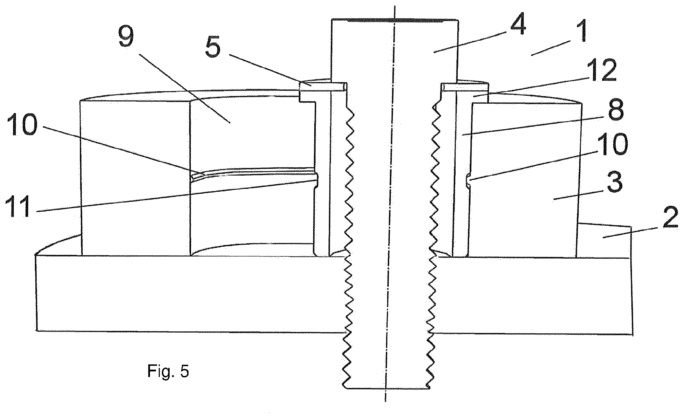

Fig. 5 shows a preferred embodiment of the cylindrical spacer 8 with the groove 11, wherein the oval opening 9 of the plastic part 3 with the continuous circumferential projection 10 is the same as in the previous embodiment, however, the cylindrical spacer 8 is provided with a collar 12 at the upper end. The upper face of the collar 12 then accommodates a washer 5.

## Claims

1. Assembly comprising a plastic part, a basic part and a screw, where an oval opening is made in the plastic part to allow the screw to be positioned against a threaded opening in the basic part, **characterized in that** the oval opening (9) of the plastic part (3) is provided with a projecting continuous circumferential projection (10) and a cylindrical spacer (8) is provided with a circumferential groove (11) on its outer circumference, wherein the continuous circumferential projection (10) is provided in the oval opening (9) at a height corresponding to the position of the groove (11) on the outer circumference of the cylindrical spacer (8).

2. Assembly according to claim 1, **characterized in that** the width of the circumferential groove (11) is greater than the width of the continuous circumferential projection (10).

3. Assembly of claim 1, **characterized in that** the continuous circumferential projection (10) is arranged at half the height of the oval opening (9) and the circumferential groove (11) on the cylindrical spacer (8) is arranged at half the height of the cylindrical spacer (8).

4. Assembly according to claim 1, **characterized in that** the cylindrical spacer (8) with groove (11) is provided with a collar (12) at the upper end.

5. Assembly according to claim 1, **characterized in that** the cylindrical spacer (8) is made of metal as formed or machined by lathe.

## Patentansprüche

1. Baugruppe die aus einem Kunststoffteil, Basisteil und einer Schraube, wobei ein ovales Loch in dem Kunststoffteil hergestellt ist, um die Positionierung der Schraube relativ zu einem Gewindeloch in dem Basisteil zu ermöglichen, **dadurch gekennzeichnet, dass,** das ovale Loch (9) des Kunststoffteils (3) mit einem vorstehenden Umfangsvorsprung (10) versehen ist und der zylindrische Abstandshalter (8) an seinem Außenumfang mit einer Umfangsnut (11) versehen ist, wobei der Umfangsvorsprung (10) in dem ovalen Loch (9) in einer Höhe vorgesehen ist, die der Position der Nut (11) am Außenumfang des Abstandshalters (8) entspricht.

2. Baugruppe nach Anspruch 1, **dadurch gekennzeichnet, dass** die Breite der umlaufenden Nut (11) größer ist als die Breite des umlaufenden Umfangsvorsprungs (10).

3. Baugruppe nach Anspruch 1, **dadurch gekennzeichnet, dass** der Umfangsvorsprung (10) auf halber Höhe des ovalen Loches (9) und die umlaufende Nut (11) am Abstandshalter (8) auf halber Höhe des Abstandshalters (8) angeordnet ist.

4. Baugruppe nach Anspruch 1, **dadurch gekennzeichnet, dass** der Abstandhalter (8) am oberen Ende mit einem Kragen (12) versehen ist.

5. Baugruppe nach Anspruch 1, **dadurch gekennzeichnet, dass** der Abstandhalter (8) aus Metall geformt oder auf einer Drehmaschine hergestellt ist.

## Revendications

1. Assemblage comprenant une pièce en plastique, une pièce de base et d'une vis, dans lequel un trou ovale est pratiqué dans la pièce en plastique pour permettre à la vis d'être positionnée par rapport à un trou fileté dans la pièce de base, **caractérisé par le fait que**, le trou ovale (9) de la pièce en plastique (3) est pourvu d'un rebord circonférentiel en saillie (10) et l'entretoise cylindrique (8) est pourvue d'une rainure circonférentielle (11) sur sa circonférence extérieure, le rebord circonférentiel (10) étant prévu dans le trou ovale (9) à une hauteur correspondant à la position de la rainure (11) sur la circonférence extérieure de l'entretoise (8).

2. Assemblage selon la revendication 1, **caractérisé en ce que** la largeur de la rainure circonférentielle (11) est supérieure à la largeur du rebord circonférentiel (10).

3. Assemblage selon la revendication 1, **caractérisé en ce que** le rebord circonférentiel (10) est disposé à mi-hauteur du trou ovale (9) et la rainure circonférentielle (11) sur l'entretoise (8) est disposée à mi-hauteur de l'entretoise (8).

4. Assemblage selon la revendication 1, **caractérisé en ce que** l'entretoise (8) est pourvue d'une collerette (12) à l'extrémité supérieure.

5. Assemblage selon la revendication 1, **caractérisé en ce que** l'entretoise (8) est réalisée par formage ou usinage sur un tour.
